# EUROPEAN PATENT APPLICATION

(11) **EP 4 407 507 A1**
(43) Date of publication of application: **31.07.2024**
(21) Application number: 22871966.2
(22) Date of filing: 20.09.2022
(51) Int. Cl.: G06F 40/109, G06F 40/166

(54) **TEXT DISPLAY METHOD AND TEXT DISPLAY APPARATUS**

(30) Priority: 24.09.2021 CN 202111120215
(71) Applicant: Vivo Mobile Communication Co., Ltd., Dongguan, Guangdong 523863 (CN)
(72) Inventor: LIU, Zhaohui, Dongguan, Guangdong 523863 (CN)
(74) Representative: Lavoix
(86) International application number: PCT/CN2022/119901
(87) International publication number: WO 2023/045920

(57) **Abstract**

This application discloses a text display method and a text display apparatus, and pertains to the field of communication technologies. The method includes: in a case that a text edit interface is displayed, receiving a first input, where the first input is used to input a target character (101); determining a target display parameter corresponding to the target character according to the target character (102); and displaying target text content according to the target display parameter (103), where the target text content is text content input after the target character is received, or text content selected before the target character is received.

## Description

### CROSS-REFERENCE TO RELATED APPLICATIONS

This application claims priority to Chinese Patent Application No. 202111120215.3, filed on September 24, 2021 in China, which is incorporated herein by reference in its entirety.

### TECHNICAL FIELD

This application pertains to the field of communication technologies, and specifically relates to a text display method and a text display apparatus.

### BACKGROUND

In related technologies, for a text display parameter on a mobile terminal such as a mobile phone, a user may adjust the text display parameter in the process of editing text or after text editing is completed. However, in the related technologies, adjustment on the text display parameter usually requires switching back and forth between a text display parameter setting interface and a text edit interface, resulting in a cumbersome operation process.

### SUMMARY

Embodiments of this application aim to provide a text display method and a text display apparatus, to simplify an operation process of setting a text display parameter.

To resolve the technical problem, this application is implemented as follows:

According to a first aspect, an embodiment of this application provides a text display method, including:
in a case that a text edit interface is displayed, receiving a first input, where the first input is used to input a target character;
determining a target display parameter corresponding to the target character according to the target character; and
displaying target text content according to the target display parameter, where the target text content is text content input after the target character is received, or text content selected before the target character is received.

According to a second aspect, an embodiment of this application provides a text display apparatus, including:
a first input module, configured to: in a case that a text edit interface is displayed, receive a first input, where the first input is used to input a target character;
a first determining module, configured to determine a target display parameter corresponding to the target character according to the target character; and
a first display module, configured to display target text content according to the target display parameter, where the target text content is text content input after the target character is received, or text content selected before the target character is received.

According to a third aspect, an embodiment of this application provides an electronic device. The electronic device includes a processor, a memory, and a program or an instruction that is stored in the memory and that can be run on the processor, where when the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or an instruction to implement the method according to the first aspect.

According to a sixth aspect, an embodiment of this application provides a computer program/program product, where the computer program/program product is stored in a non-transient storage medium, and the program/program product is executed by at least one processor to implement the steps of the method according to the first aspect.

According to a seventh aspect, an electronic device is provided, configured to perform the steps of the method according to the first aspect.

In the embodiments of this application, in a case that a text edit interface is displayed, a first input is received, where the first input is used to input a target character; a target display parameter corresponding to the target character is determined according to the target character; and target text content is displayed according to the target display parameter, where the target text content is text content input after the target character is received, or text content selected before the target character is received. In this way, the display parameter of the target text content can be adjusted according to the target character input by the user in the text edit interface. Compared with the technical solution in the related technologies that the display parameter of the text content in the text edit interface can be adjusted through an operation on the text display parameter setting interface only when back and forth switching is performed between the text edit interface and the text display parameter setting interface, the embodiments of this application simplify the operation process of setting the text display parameter.

### BRIEF DESCRIPTION OF DRAWINGS

FIG. 1 is a flowchart of a text display method according to an embodiment of this application;
FIG. 2a is a schematic diagram of a first window control according to an embodiment of this application;
FIG. 2b is a schematic diagram of a natural language processing mode control according to an embodiment of this application;
FIG. 3a is a schematic diagram of dividing text in a text edit interface into N paragraphs according to an embodiment of this application;
FIG. 3b is a schematic diagram of dividing text in the text edit interface into M statements according to an embodiment of this application;
FIG. 3c is a schematic diagram of dividing text in the text edit interface into L phrases according to an embodiment of this application;
FIG. 4 is a schematic structural diagram of a text display apparatus according to an embodiment of this application;
FIG. 5 is a schematic structural diagram of an electronic device according to an embodiment of this application; and
FIG. 6 is a schematic structural diagram of another electronic device according to an embodiment of this application.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

The execution body of a text display method provided in embodiments of this application may be a mobile terminal such as a mobile phone, a tablet computer, a smart watch, or the like. For example, a function such as memo, note, or SMS editing applied to a mobile phone is used to adjust text content of the note, the SMS, or the like in terms of display parameters such as a font, a font color, a background color, a text size, text bolding, and text italicizing.

In the related technologies, text display parameters on a mobile terminal such as a mobile phone are usually set in the following two manners:
1. Back and forth switching is performed between a text display parameter setting interface and a text edit interface. In the process of editing text content, display parameters of text subsequently input in the text edit interface are adjusted through a touch operation in the text display parameter setting interface.
2. After text input is completed, text content in the text edit interface is selected through a touch input such as long-pressing, and display parameters of the selected text content are adjusted through a touch operation in the text display parameter setting interface. In this manner, back and forth switching is also required between the text display parameter setting interface and the text edit interface, and a selection operation also needs to be performed on text on which format editing needs to be performed.

It can be learned from the foregoing that, regardless of the manner selected to set the text display parameters, back and forth switching needs to be performed between the text display parameter setting interface and the text edit interface, to adjust the format of the text content in the text edit interface. This interrupts an operation process of text editing.

In embodiments of this application, an association relationship between a target character and a target display parameter is pre-stored, so that a user only needs to input the target character in the text edit interface to determine the target display parameter based on the association relationship between the target character and the target display parameter. In this way, target text content is displayed according to the target display parameter, and back and forth switching does not need to be performed between the text display parameter setting interface and the text edit interface, making a text edit operation more coherent, thereby simplifying an operation process of setting the text display parameters.

Certainly, the execution body of the text display method provided in the embodiments of this application may alternatively be another electronic device such as a computer. This is not specifically limited herein. For ease of description, in the following embodiments, an example in which the execution body of the text display method provided in the embodiments of this application is a mobile phone, and the method is specifically used for format adjustment on text content in a memo function of the mobile phone is used to describe the text display method provided in the embodiments of this application. This does not constitute a specific limitation herein.

The following describes in detail a text display method, a text display apparatus, an electronic device, and a computer-readable storage medium provided in the embodiments of this application through specific embodiments and application scenarios thereof with reference to the accompanying drawings.

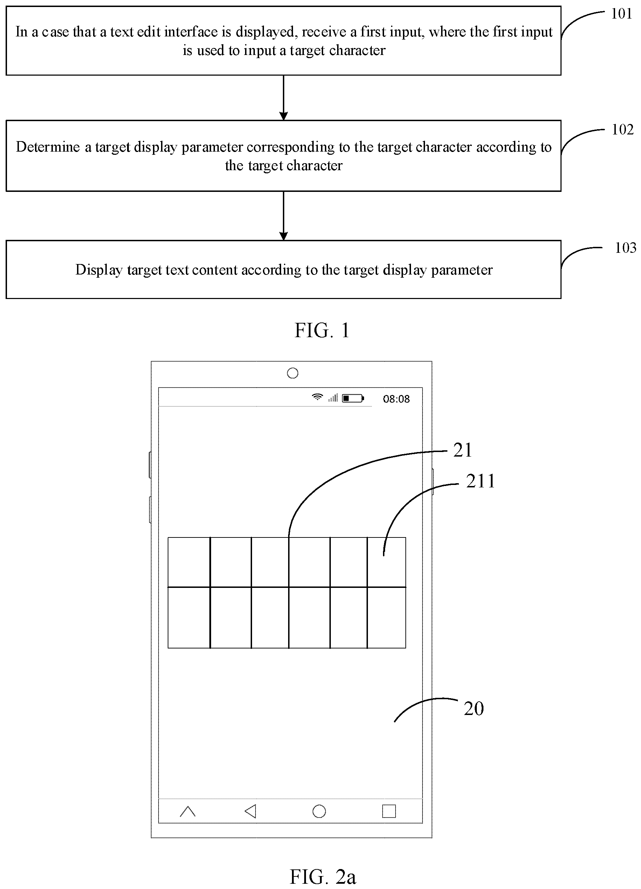

With reference to FIG. 1, a text display method provided in an embodiment of this application includes the following steps.

Step 101: In a case that a text edit interface is displayed, receive a first input, where the first input is used to input a target character.

In a specific implementation, the text edit interface may be an interface on which text editing can be performed, for example, an SMS edit interface, a note edit interface, or the like. The target character may include one or more of: a letter, a number, a special character, and the like. For example, the letter B may be pre-associated with a display parameter "font bolding", the letter R may be pre-associated with a display parameter "red font", and different display parameters are associated with different characters.

The first input may include a character input operation performed in the text edit interface. For example, a touch operation is performed on a touch keyboard in the text edit interface, to input the target character in the text edit interface.

Optionally, to distinguish the target character from text content in the text edit interface, the text content and the target character may be displayed in different display areas or display boxes, or, the target character may be spaced apart from the text content by using a special symbol (for example, a space, @, A, or another special symbol).

Step 102: Determine a target display parameter corresponding to the target character according to the target character.

In a specific implementation, an association relationship between the target character and the target display parameter may be pre-stored, so that when the target character is received, the display parameter associated with the target character can be determined as the target display parameter.

Optionally, the association relationship between the target character and the target display parameter may be pre-set by a user or set by default in an electronic device that performs the text display method provided in this embodiment of this application. In a case that the association relationship between the target character and the target display parameter is set by default in the electronic device that performs the text display method provided in this embodiment of this application, the electronic device may output prompt information in any manner such as display or voice report, in order to notify, through the prompt information, the user of the association relationship between the target character and the target display parameter.

Step 103: Display target text content according to the target display parameter, where the target text content is text content input after the target character is received, or text content selected before the target character is received.

In an optional implementation, that the target text content is the text content input after the target character is received may be understood as: text content input in the text edit interface within a predetermined time (for example, 1 minute or 2 minutes) after the target character is input; or text content arranged after the target character in the text edit interface.

In a case that the target text content is the text content arranged after the target character in the text edit interface, the target text content and the target character are both text content input in the text edit box, and a target termination symbol may be input at the end of the target text content, so that other text content arranged after the target termination symbol in the text edit interface is no longer displayed according to the target display parameter. For example: text content located between the target character and the target termination symbol in the text edit interface is displayed according to the target display parameter, and the other text content arranged after the target termination symbol is displayed according to default display parameters (for example: black, font size 5, Imitation Song Dynasty (a Chinse character typeface), and other default display parameters).

Certainly, to realize that text content other than the target text content in the text edit interface is no longer displayed according to the target display parameter, the following manner may also be used:
displaying a default format button in the text edit interface;
in a case that the target text content is input, receiving a touch input for the displayed default format button; and
adjusting the target display parameter to a default display parameter in response to the touch input.

In this way, after the target display parameter is adjusted to the default display parameter, text content newly input into the text edit interface is displayed according to the default display parameter.

In another optional implementation, before the receiving a first input, the method further includes:
receiving a second input;
displaying a first setting interface in response to the second input; receiving a third input in the first setting interface; and
associating the target character with the target display parameter in response to the third input.

In a specific implementation, the second input and the third input may each include one or more of touch operations such as clicking, long-pressing, double-clicking, re-pressing, and the like, and the second input is used for triggering display of the first setting interface. The first setting interface may be understood as a setting interface for the association relationship between the target character and the target display parameter. For example, a plurality of candidate display parameters are displayed in the first setting interface, and a character input box control is displayed corresponding to each candidate display parameter. When the user inputs a particular character in a character input box control corresponding to a target candidate display parameter, an association relationship between the character and the target candidate display parameter is determined. For another example, in a case that the character R is input in a character input box control corresponding to a display parameter: red text, the character R may be associated with the red text. In this way, in a subsequent text editing process, if the target character input by the user includes R, the target text content may be displayed in red.

Certainly, in actual application, the target character may include a plurality of characters, and each character corresponds to one display parameter. In this case, the target text content is displayed according to display parameters corresponding to all the characters included in the target character. For example, assuming that the target character is: BIR4, where B is associated with a display parameter: font bolding, I is associated with a display parameter: font italicizing, R is associated with a display parameter: red font, and 4 is associated with a display parameter: font size 4, the target text content is displayed in a bolding and italicized manner, and is displayed as a red font size 4.

It should be noted that, the special character in the target character is exemplified by numbers and uppercase letters. However, in actual application, the target character may also include other characters such as lowercase letters, special symbols, and the like. This is not exhaustively listed herein.

In this implementation, the association relationship between the target character and the target display parameter is pre-set by the user, and personalized settings of the association relationship between the target character and the target display parameter may be implemented according to personal habits and preferences of the user.

It should be noted that, the association relationship between the target character and the target display parameter may be not only the association relationship in which one character corresponds to one display parameter, but also an association relationship in which one character corresponds to a plurality of candidate display parameters. For example, for commonly used colors: red and yellow, a one-to-one association relationship may be set between a character and a display parameter (for example, red is associated with the character R (or the lowercase letter r), and yellow is associated with the character Y (or the lowercase letter y)). For infrequently used colors, there are a variety of optional colors other than red and yellow. In this case, these various font color display parameters may be associated with a same character, so that in a case that the user inputs the character, function options corresponding to the various font color display parameters associated with the character may be displayed, so that the user selects a required font color from the function options.

For example, as shown in FIG. 2a, if the user wants to select an infrequently used font color, the user may input a target character C (or a lowercase letter c), where the target character C is associated with a plurality of infrequently used font colors. In this case, in response to C input by the user, a first window control 21 shown in FIG. 2a is displayed, where the first window control 21 includes color blocks 211 that are in one-to-one correspondence with infrequently used font colors, and in a case that the user clicks one of the color blocks 211, a color displayed by the color block is selected as a target font color, so that the target text content is displayed according to the target font color. It should be noted that, the first window control 21 may be displayed in any one of the display manners: floating display on the text edit interface and full-screen display. In addition, after the first window control 21 is displayed, the first window control 21 may be closed by clicking a non-color area in the first window control 21 or a return key.

In an optional implementation, in a case that the target character is pre-associated with at least two candidate display parameters, the determining a target display parameter corresponding to the target character according to the target character includes:
displaying a first window control in response to the first input, where the first window control includes function options in one-to-one correspondence with the at least two candidate display parameters;
receiving a fourth input for a target function option, where the function options in one-to-one correspondence with the at least two candidate display parameters include the target function option; and
in response to the fourth input, displaying a candidate display parameter corresponding to the target function option as the target display parameter.

In a specific implementation, in a case that the at least two candidate display parameters are both candidate colors, the function options may include color blocks of colors the same as candidate colors corresponding to the function options; and in a case that the at least two candidate display parameters are both candidate fonts, the function options may include text of fonts the same as candidate fonts corresponding to the function options. This facilitates the user in intuitively selecting the target function option.

It should be noted that, the at least two candidate display parameters further include: a text size or a text spacing and other display parameters with a plurality of values. In this regard, the function option may include text of a size the same as a candidate text size corresponding to the function option, or the function option may include text content, and a text spacing in the text content is the same as a text spacing corresponding to the function option. Types of the at least two candidate display parameters, and a representation manner of the function options for the candidate display parameters corresponding to the function options are not exhaustively listed herein.

In addition, the fourth input may include one or more of: clicking, long-pressing, sliding, double-clicking, and other touch inputs for the target function option. This is not specifically limited herein.

In this implementation, one character may be associated with the at least two candidate display parameters, and the first window control may be displayed when the character is input during the first input, so that the user selects a candidate display parameter from the at least two candidate display parameters as the target display parameter. In this way, there is no need to set a corresponding character for each value or each option of a display parameter type with a plurality of values or a plurality of options, so that a quantity of characters corresponding to all the display parameters is greatly reduced, and complexity of memorizing and using the association relationship between the character and the display parameter by the user is greatly alleviated.

In an optional implementation, before step 101, the text display method further includes:
performing natural language processing on text in the text edit interface, to divide the text in the text edit interface into at least two parts of text; and
displaying character input box controls in one-to-one correspondence with the at least two parts of text, where
the first input is used to input the target character in a target character input box control, where the target text content includes some text corresponding to the target character input box control, and the character input box controls in one-to-one correspondence with the at least two parts of text include the target character input box control.

It should be noted that, the text in the text edit interface may be target text content pre-selected by the user, or all text content that has been input in the text edit interface.

In an implementation, after text input in the text edit interface is completed, a text content selection mode may be enabled through an input operation such as long pressing. At this time, target text content on which format adjustment needs to be performed may be selected through an input such as cursor movement, and after the target text content is selected, the foregoing natural language processing is performed on the selected target text content, to divide the target text content into at least two parts of text, and display character input box controls in one-to-one correspondence with the at least two parts of text.

In another implementation, after text input in the text edit interface is completed, the foregoing natural language processing may be performed on all the text content in the text edit interface, to divide all the text content in the text edit interface into at least two parts of text, and display character input box controls in one-to-one correspondence with the at least two parts of text.

In a specific implementation, the foregoing natural language processing may be processing such as text semantic comparison or text format recognition on the text in the text edit interface, so as to divide the text in the text edit interface into at least two parts according to a processing result.

For example, a same title and body text under the title are grouped into one part, text in a same text paragraph is grouped into one part, text in a same text statement is grouped into one part, text in a same phrase is grouped into one part, or the like.

In an implementation, the character input box controls in one-to-one correspondence with the at least two parts of text may all be displayed in a second window, and each character input box control in the second window has identifier information of a corresponding text part. In this way, in a process of performing format adjustment on a part of text or some parts of text, only a character corresponding to a required display parameter needs to be input in a character input box control corresponding to the part of the text.

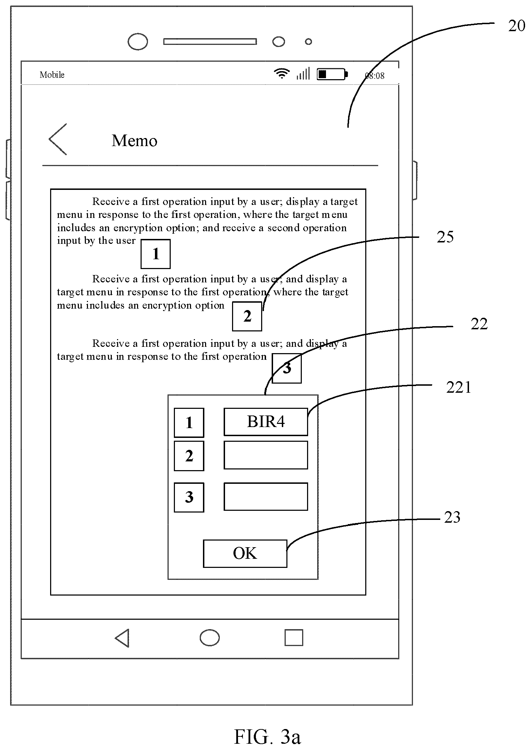

For example, as shown in FIG. 3a, the text content in the text edit interface 20 is divided into three paragraphs, and each paragraph has a corresponding paragraph number. A second window 22 is displayed in the text edit interface 20 in a floating manner. The second window 22 includes three character input box controls 221 in one-to-one correspondence with the three paragraphs. After a target character BIR4 is input in a character input box control 221 corresponding to the first paragraph (that is, a statement with a paragraph number "1"), the second window 22 may be closed by clicking an OK button 23, and text in the first paragraph is displayed according to display parameters corresponding to the target character BIR4 (that is, text bolding, text italicizing, red font, and font size 4), and display parameters of the second paragraph and the third paragraph may still be default display parameters.

Further, in a case that a preset touch input (for example, a single-click touch input) for a target paragraph number is received, position/jump to paragraph content corresponding to the target paragraph number, to display the paragraph content corresponding to the target paragraph number in the text edit interface.

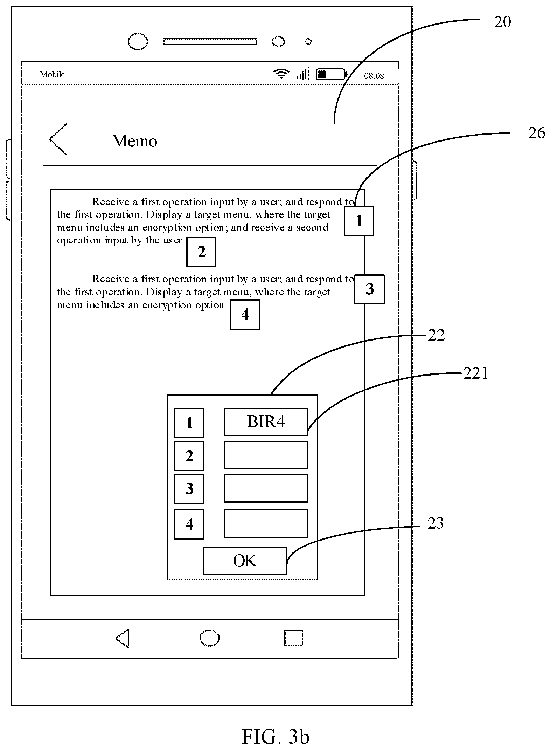

Similarly, as shown in FIG. 3b, in a case that the text content in the text edit interface 20 is divided into four statements, and each statement has a corresponding statement number, the second window 22 is displayed in the text edit interface 20 in a floating manner. The second window 22 includes four character input box controls 221 in one-to-one correspondence with the four statements. After a target character BIR4 is input in a character input box control 221 corresponding to the first statement (that is, a statement with a statement number "1"), the second window 22 may be closed by clicking the OK button 23, and text in the first statement is displayed according to display parameters corresponding to the target character BIR4 (that is, text bolding, text italicizing, red font, and font size 4), and display parameters of the second statement to the fourth statement may still be default display parameters.

Further, in a case that a preset touch input (for example, a single-click touch input) for a target statement number is received, position/jump to statement content corresponding to the target statement number, to display the statement content corresponding to the target statement number in the text edit interface.

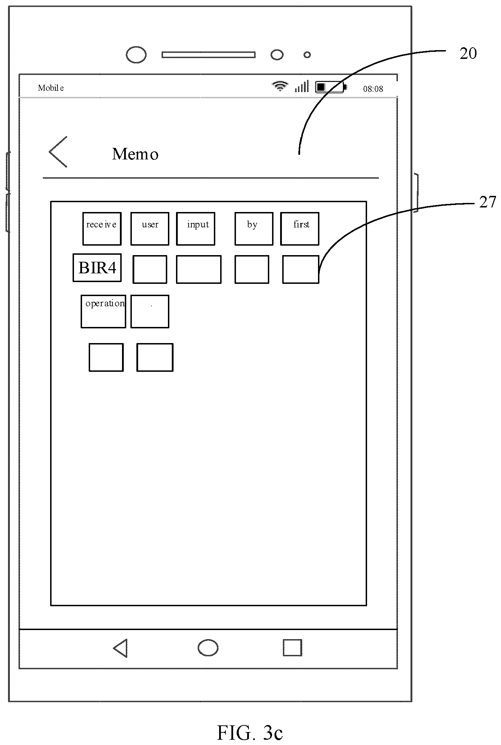

In another embodiment, the character input box controls in one-to-one correspondence with the at least two parts of text may be displayed close to respective corresponding parts of text. For example, as shown in FIG. 3c, the text content in the text edit interface 20 is divided into seven phrases, and a character input box control 27 corresponding to each phrase is displayed below the phrase. After the user inputs the target character BIR4 in the character input box control 27 below the phrase "receive", the phrase "receive" may be displayed according to the display parameters corresponding to the target character BIR4 (that is, text bolding, text italicizing, red font, and font size 4), and display parameters of other phrases may still be default display parameters.

In a specific implementation, the user may select different natural language processing modes to perform format adjustment on text in a particular paragraph, perform format adjustment on text in a particular statement, or perform format adjustment on only a particular phrase. For ease of description, in the following embodiment, an example in which the at least two parts of text include: at least two paragraphs, at least two statements, or at least two phrases is used to describe the natural language processing mode.

In an implementation, a natural language processing mode control is displayed on the text edit interface. A natural language processing mode is switched according to a quantity of times the user touches the natural language processing mode control.

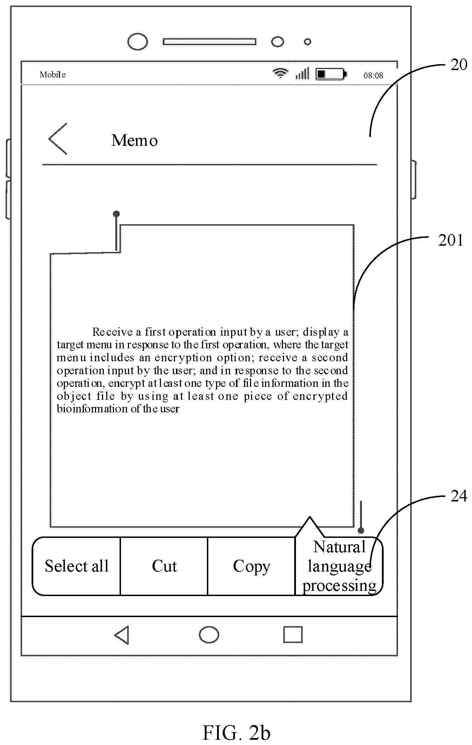

For example, as shown in FIG. 2b, a natural language processing mode control 24 is displayed on the text edit interface 20. When the user performs single-clicking on the natural language processing mode control 24, text content 201 in the text edit interface 20 is divided into at least two parts of text according to respective paragraphs, that is, the interface shown in FIG. 3a is displayed. When the user performs double-clicking on the natural language processing mode control 24, the text content in the text edit interface 20 is divided into at least two parts of text according to respective statements, that is, the interface shown in FIG. 3b is displayed. When the user clicks the natural language processing mode control 24 for three consecutive times, the text content in the text edit interface 20 is divided into at least two parts of text according to respective phrases, that is, the interface shown in FIG. 3c is displayed.

In another implementation, in a case that the natural language processing mode is enabled, the text content in the text edit interface 20 may be divided, by default in a paragraph division manner, into at least two parts of text according to the respective paragraphs, and in a case that the user performs a preset operation (for example, long-pressing a paragraph number) on a particular paragraph, text content in the paragraph is divided into at least two parts of text according to the respective statements; or, even, in a case that the user performs a preset operation (for example, long-pressing a statement number) on a particular statement, text content in the statement is divided into at least two parts of text according to the corresponding phrases.

Optionally, the performing natural language processing on text in the text edit interface, to divide the text in the text edit interface into at least two parts of text includes:
displaying a natural language processing mode control;
receiving a fifth input for the natural language processing mode control; and
in response to the fifth input, performing first natural language processing on the text in the text edit interface, to divide the text in the text edit interface into N paragraphs, where N is an integer greater than 1;
in a case that the at least two parts of text include at least two statements, the method further includes:
   receiving a sixth input for a target paragraph, where the N paragraphs include the target paragraph; and
   in response to the sixth input, performing second natural language processing on the target paragraph, to divide the target paragraph into M statements, where M is an integer greater than 1; and
   in a case that the at least two parts of text include at least two phrases, the method further includes:
      receiving a seventh input for a target statement, where the M statements include the target statement; and
      in response to the seventh input, performing third natural language processing on the target statement, to divide the target statement into L phrases, where L is an integer greater than 1.

In a specific implementation, the fifth input, the sixth input, and the seventh input may each include one or more of touch inputs such as clicking, long-pressing, and double-clicking.

Specifically, as shown in FIG. 2b and FIG. 3a, the fifth input may be a touch input for the natural language processing mode control 24, and in response to the fifth input, the text in the text edit interface 20 may be divided into N paragraphs, and N paragraph numbers 25 may be displayed, to identify the N paragraphs by using the paragraph numbers 25. The foregoing first natural language processing may be understood as follows: according to a paragraph division format of the text content in the text edit interface, for example, a format such as spacing before paragraphs or first line indent, a paragraph division position of the text content is determined, so that paragraph division is performed by using the paragraph division position as a boundary.

As shown in FIG. 3a and FIG. 3b, the sixth input may be a touch input for text content in a target paragraph or a paragraph number 25 of the target paragraph, and in response to the sixth input, the target paragraph may be divided into M statements, and M statement numbers 26 may be displayed, to identify the M statements by using the statement numbers 26. The foregoing second natural language processing may be understood as follows: according to a statement division format of the text content in the text edit interface, for example, positions of the period "." and the semicolon ";" are detected, statement division is performed by using a position of the period or semicolon as a boundary.

As shown in FIG. 3b and FIG. 3c, the seventh input may be a touch input for text content in a target statement or a statement number 26 of the target statement, and in response to the seventh input, the target statement may be divided into L phrases, and L character input box controls 27 may be displayed in display areas in one-to-one correspondence with the L phrases, to distinguish between the character input box controls of the L phrases by using different display areas. The foregoing third natural language processing may be understood as follows: semantic recognition is performed on the text content in the text edit interface, to split a complete statement into at least two phrases, where each phrase may include one or more pieces of text, or the phrases may further include a punctuation.

Compared with the implementation in which the natural language processing mode is switched according to the quantity of times the user touches the natural language processing mode control, in this implementation, text content on which format adjustment needs to be performed can be accurately determined according to an operation of the user on paragraphs, statements, and phrases. In a case that a large amount of text content is included in the text edit interface, a statement number of each statement does not need to be displayed or a character input box control does not need to be displayed in a display area corresponding to each phrase, instead, only a statement number of a statement in the target paragraph operated by the user through the sixth input is displayed, or only a character input box control corresponding to a phrase in the target statement operated by the user through the seventh input is displayed, so as to avoid the problem that it is difficult for the user to find, from a large quantity of statement numbers or a large quantity of character input box controls corresponding to phrases, the text content on which format adjustment needs to be performed.

Further, the displaying character input box controls in one-to-one correspondence with the at least two parts of text includes:
in a case that the at least two parts of text include L phrases, displaying L character input box controls in L display areas corresponding to the L phrases; and
in a case that the at least two parts of text include X paragraphs or statements, displaying X text numbers in X display areas corresponding to the X paragraphs or statements, and displaying a second window, where the second window includes X character input box controls corresponding to the X text numbers, and X is an integer greater than 1.

It should be noted that the L display areas corresponding to the L phrases may be understood as follows: each phrase has a corresponding display area, and the display area may be displayed close to the corresponding phrase. For example, as shown in FIG. 3c, on the lower side of the phrase, a character input box control 27 corresponding to the phrase is displayed in a display area corresponding to the phrase. This allows each phrase to be displayed in correspondence with a character input box control corresponding to the phrase, to facilitate the user in finding, from a large quantity of character input box controls, a character input box control corresponding to a phrase on which format adjustment needs to be performed.

In addition, the displaying X text numbers in X display areas corresponding to the X paragraphs or statements, and displaying a second window may be implemented as follows: a number is allocated to each paragraph or statement obtained by division after natural language processing is performed, and each number and a character input box control corresponding to the number are displayed in correspondence in the second window. In this way, when format adjustment needs to be performed on the target text content, the user may intuitively recognize a number corresponding to the target text content, and find, from the second window, a corresponding character input box control for the number, and input the target character in the character input box control, to implement format adjustment on the target text content.

As shown in FIG. 3a and FIG. 3b, in this implementation, character input box controls 211 corresponding to all paragraphs or statements may all be displayed in the second window 21 without changing a text structure of the text content in the text edit interface 20, and in a manner in which paragraph numbers or statement numbers are in one-to-one correspondence with the character input box controls, the user can clearly learn a character input box control corresponding to each paragraph or statement, so that the target character is input in a character input box control 211 corresponding to a paragraph or a statement on which format adjustment needs to be performed, thereby implementing accurate adjustment on the format of the target paragraph or the target statement.

In an optional implementation, in a case that the target text content is text content input after the target character is received, the method further includes:
receiving an input target start character and an input target end character, where the target text content is located between the target start character and the target end character.

The target start character and the target end character may be preset special symbols. For example, the target start character is "<", and the target end character is "/>". In this way, in a process of editing text in the text edit interface, if a format of the target text content needs to be set, "<" may be inserted before the target text content, and "/" may be inserted after the target text content, to define the target text content that needs to be displayed according to the target display parameter, and content that is not located between "<" and "/>" may be displayed according to a default display parameter.

Certainly, in actual application, "<" and "/>" may alternatively be input first, and then the target text content is input between "<" and "/>". Alternatively, "<", the target text content, and "/>" are sequentially input one after another. Input occasions of "<", the target text content, and "/>" are not specifically limited herein.

The difference between this implementation and the previous optional implementation is as follows. In the previous optional implementation, natural language processing needs to be performed on the text content in the text edit interface, to divide the text content into at least two parts, and character input box controls in one-to-one correspondence with the at least two parts of text are displayed, and then the part of text corresponding to the target character input box control is determined as the target text content through the target character input in the target character input box control. In this implementation, the target start character and the target end character are directly input in the process of editing the text content, so that the target text content on which format adjustment needs to be performed can be selected, thereby further improving fluency of the text editing process.

Further, the target character may alternatively be located between the target start character and the target end character. For example, <BIR4xxxxx/> is input in the text edit interface. In this case, the target text content "xxxxx" is displayed according to the display parameters corresponding to the target character BIR4 (that is, text bolding, text italicizing, red font, and font size 4).

In this implementation, in view of the fact that the target character and the target text content are both located between the target start character and the target end character, to avoid confusing the target text content with a character in the target character, one or more special characters, such as a symbol "A" or two space characters, may alternatively be interposed between the target character and the target text content, to distinguish between the target text content and the target character by recognizing the one or more special characters, so that reliability of the text display method can be improved.

Certainly, the target character may not only be input between the target start character and the target end character, but also be input in another display area or window. For example, in a case that the target text content is defined by using the target start character and the target end character, the target character may be input in a character input box control displayed in a floating manner. This is not specifically limited herein.

In actual application, there may also be cases that the target character includes at least two conflicting characters. For example, assuming that the character R is associated with a red font and the character Y is associated with a yellow font, if the target character includes the letters R and Y that are associated with fonts of different colors, it indicates that the target character includes two conflicting characters. In this case, the problem that the target display parameter cannot be accurately determined due to that the target character includes two conflicting characters can be overcome in the following manners:

### Manner 1

In a case that the target character includes at least two conflicting characters, a character arranged at the first position in the at least two conflicting characters is used as a valid character, and another character in the at least two conflicting characters other than the character arranged at the first position is used as an invalid character, so that it is determined that the target display parameter includes a display parameter corresponding to the valid character.

### Manner 2

In a case that the target character includes at least two conflicting characters, prompt information is output, to prompt the user to re-input the target character, or delete conflicting characters in the target character.

It should be noted that the text display method provided in this embodiment of this application may be performed by a text display apparatus, or a control module that is in the text display apparatus and that is configured to perform the text display method. In embodiments of this application, an example in which the text display apparatus performs and loads the text display method is used to describe the text display apparatus provided in embodiments of this application.

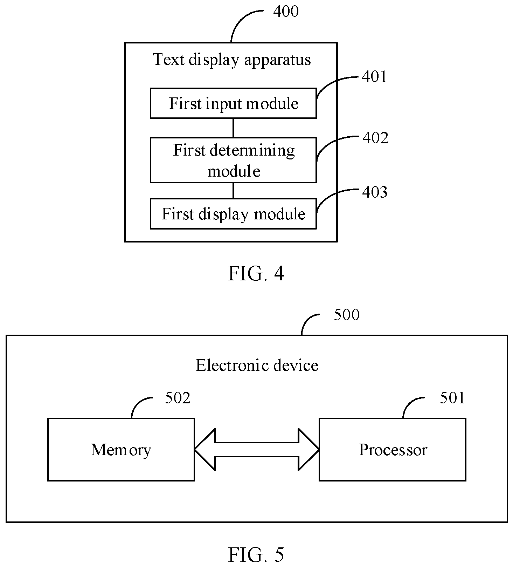

With reference to FIG. 4, a text display apparatus 400 provided in an embodiment of this application may include:
a first input module 401, configured to: in a case that a text edit interface is displayed, receive a first input, where the first input is used to input a target character;
a first determining module 402, configured to determine a target display parameter corresponding to the target character according to the target character; and
a first display module 403, configured to display target text content according to the target display parameter, where the target text content is text content input after the target character is received, or text content selected before the target character is received.

Optionally, the text display apparatus 400 further includes:
a second input module, configured to receive a second input;
a second display module, configured to display a first setting interface in response to the second input;
a third input module, configured to receive a third input in the first setting interface; and
an association module, configured to associate the target character with the target display parameter in response to the third input.

Optionally, in a case that the target character is pre-associated with at least two candidate display parameters, the first determining module 402 includes:
a first display unit, configured to display a first window control in response to the first input, where the first window control includes function options in one-to-one correspondence with the at least two candidate display parameters;
a first input unit, configured to receive a fourth input for a target function option, where the function options in one-to-one correspondence with the at least two candidate display parameters include the target function option; and
a first determining unit, configured to: in response to the fourth input, display a candidate display parameter corresponding to the target function option as the target display parameter.

Optionally, the text display apparatus 400 further includes:
a first processing module, configured to perform natural language processing on text in the text edit interface, to divide the text in the text edit interface into at least two parts of text; and
a third display module, configured to display character input box controls in one-to-one correspondence with the at least two parts of text, where
the first input is used to input the target character in a target character input box control, where the target text content includes some text corresponding to the target character input box control, and the character input box controls in one-to-one correspondence with the at least two parts of text include the target character input box control.

Optionally, the at least two parts of text include: at least two paragraphs, at least two statements, or at least two phrases.

Optionally, the first processing module includes:
a second display unit, configured to display a natural language processing mode control;
a second input unit, configured to receive a fifth input for the natural language processing mode control; and
a first processing unit, configured to: in response to the fifth input, perform first natural language processing on the text in the text edit interface, to divide the text in the text edit interface into N paragraphs, where N is an integer greater than 1;
in a case that the at least two parts of text include at least two statements, the apparatus 400 further includes:
   a fourth input module, configured to receive a sixth input for a target paragraph, where the N paragraphs include the target paragraph; and
   a second processing module, configured to: in response to the sixth input, perform second natural language processing on the target paragraph, to divide the target paragraph into M statements, where M is an integer greater than 1; and
   in a case that the at least two parts of text include at least two phrases, the apparatus 400 further includes:
      a fifth input module, configured to receive a seventh input for a target statement, where the M statements include the target statement; and
      a third processing module, configured to: in response to the seventh input, perform third natural language processing on the target statement, to divide the target statement into L phrases, where L is an integer greater than 1.

Optionally, the third display module is specifically configured to:
in a case that the at least two parts of text include L phrases, display L character input box controls in L display areas corresponding to the L phrases; and
in a case that the at least two parts of text include X paragraphs or statements, display X text numbers in X display areas corresponding to the X paragraphs or statements, and display a second window, where the second window includes X character input box controls corresponding to the X text numbers, and X is an integer greater than 1.

Optionally, in a case that the target text content is text content input after the target character is received, the text display apparatus 400 further includes:
a sixth input module, configured to receive an input target start character and an input target end character, where the target text content is located between the target start character and the target end character.

The text display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a network attached storage (Network Attached Storage, NAS), a personal computer (personal computer, PC), a television (television, TV), a teller machine, a self-service machine, or the like. This is not specifically limited in this embodiment of this application.

The text display apparatus in this embodiment of this application may be an apparatus with an operating system. The operating system may be an Android (Android) operating system, an iOS operating system, or another possible operating system. This is not specifically limited in this embodiment of this application.

The text display apparatus provided in this embodiment of this application can implement each process for implementing the method embodiment shown in FIG. 1, and can achieve the same beneficial effect. To avoid repetition, details are not described herein again.

Optionally, as shown in FIG. 5, an embodiment of this application further provides an electronic device 500, including a processor 501, a memory 502, and a program or an instruction that is stored in the memory 502 and that can be run on the processor 501. When the program or the instruction is executed by the processor 501, each process of the foregoing text display method embodiment is implemented, and a same technical effect can be achieved. To avoid repetition, details are not described herein again.

It should be noted that the electronic device in this embodiment of this application includes the foregoing mobile electronic device and the foregoing non-mobile electronic device.

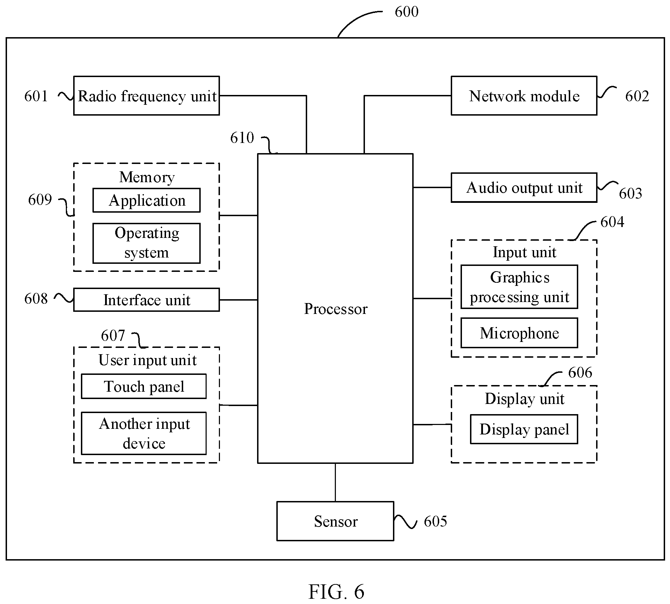

FIG. 6 is a schematic diagram of a hardware structure of an electronic device according to an embodiment of this application.

The electronic device 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the electronic device 600 may further include a power supply (such as a battery) that supplies power to each component. The power supply may be logically connected to the processor 610 by using a power management system, to implement functions such as charging and discharging management, and power consumption management by using the power management system. The structure of the electronic device shown in FIG. 6 does not constitute a limitation on the electronic device. The electronic device may include components more or fewer than those shown in the figure, or combine some components, or have different component arrangements. Details are not described herein again.

The user input unit 607 is configured to: in a case that the display unit 606 displays a text edit interface, receive a first input, where the first input is used to input a target character.

The processor 610 is configured to determine a target display parameter corresponding to the target character according to the target character.

The display unit 606 is further configured to display target text content according to the target display parameter, where the target text content is text content input after the target character is received, or text content selected before the target character is received.

Optionally, before receiving the first input, the user input unit 607 is further configured to receive a second input.

The display unit 606 is further configured to display a first setting interface in response to the second input.

The user input unit 607 is further configured to receive a third input in the first setting interface.

The processor 610 is further configured to associate the target character with the target display parameter in response to the third input.

Optionally, in a case that the target character is pre-associated with at least two candidate display parameters, that the processor 610 determines the target display parameter corresponding to the target character according to the target character includes:
the display unit 606 is configured to display a first window control in response to the first input, where the first window control includes function options in one-to-one correspondence with the at least two candidate display parameters;
the user input unit 607 is configured to receive a fourth input for a target function option, where the function options in one-to-one correspondence with the at least two candidate display parameters include the target function option; and
the processor 610 is configured to: in response to the fourth input, display a candidate display parameter corresponding to the target function option as the target display parameter.

Optionally, before the user input unit 607 receives the first input,
the processor 610 is further configured to perform natural language processing on text in the text edit interface, to divide the text in the text edit interface into at least two parts of text; and
the display unit 606 is further configured to display character input box controls in one-to-one correspondence with the at least two parts of text, where
the first input is used to input the target character in a target character input box control, where the target text content includes some text corresponding to the target character input box control, and the character input box controls in one-to-one correspondence with the at least two parts of text include the target character input box control.

Optionally, the at least two parts of text include: at least two paragraphs, at least two statements, or at least two phrases.

Optionally, that the processor 610 performs natural language processing on the text in the text edit interface, to divide the text in the text edit interface into at least two parts of text includes:
the display unit 606 is configured to display a natural language processing mode control;
the user input unit 607 is configured to receive a fifth input for the natural language processing mode control; and
the processor 610 is configured to: in response to the fifth input, perform first natural language processing on the text in the text edit interface, to divide the text in the text edit interface into N paragraphs, where N is an integer greater than 1;
in a case that the at least two parts of text include at least two statements,
the user input unit 607 is further configured to receive a sixth input for a target paragraph, where the N paragraphs include the target paragraph; and
the processor 610 is further configured to: in response to the sixth input, perform second natural language processing on the target paragraph, to divide the target paragraph into M statements, where M is an integer greater than 1; and
in a case that the at least two parts of text include at least two phrases,
the user input unit 607 is further configured to receive a seventh input for a target statement, where the M statements include the target statement; and
the processor 610 is further configured to: in response to the seventh input, perform third natural language processing on the target statement, to divide the target statement into L phrases, where L is an integer greater than 1.

Optionally, that the display unit 606 displays the character input box controls in one-to-one correspondence with the at least two parts of text includes:
in a case that the at least two parts of text include L phrases, the display unit 606 is configured to display L character input box controls in L display areas corresponding to the L phrases; and
in a case that the at least two parts of text include X paragraphs or statements, the display unit 606 is configured to: display X text numbers in X display areas corresponding to the X paragraphs or statements, and display a second window, where the second window includes X character input box controls corresponding to the X text numbers, and X is an integer greater than 1.

Optionally, in a case that the target text content is text content input after the target character is received, the user input unit 607 is further configured to receive an input target start character and an input target end character, where the target text content is located between the target start character and the target end character.

The electronic device provided in this embodiment of this application can implement each process in the method embodiment shown in FIG. 1, and can achieve same beneficial effect as that in the method embodiment shown in FIG. 1. To avoid repetition, details are not described herein again.

It should be understood that, in this embodiment of this application, the input unit 604 may include a graphics processing unit (Graphics Processing Unit, GPU) and a microphone. The graphics processing unit processes image data of a static picture or a video obtained by an image capture apparatus (such as a camera) in a video capture mode or an image capture mode. The display unit 606 may include a display panel. The display panel may be configured in a form of a liquid crystal display, an organic light-emitting diode, or the like. The user input unit 607 includes a touch panel and another input device. The touch panel is also referred to as a touch screen. The touch panel may include two parts: a touch detection apparatus and a touch controller. The another input device may include but is not limited to a physical keyboard, a functional button (such as a volume control button or a power on/off button), a trackball, a mouse, and a joystick. Details are not described herein. The memory 609 may be configured to store a software program and various data, including but not limited to an application and an operating system. An application processor and a modem processor may be integrated into the processor 610, the application processor mainly processes an operating system, a user interface, an application, and the like, and the modem processor mainly processes wireless communication. It may be understood that, alternatively, the modem processor may not be integrated into the processor 610.

An embodiment of this application further provides a readable storage medium. The readable storage medium stores a program or an instruction, and when the program or the instruction is executed by a processor, each process of the foregoing text display method embodiment is implemented and the same technical effect can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or a compact disc.

An embodiment of this application further provides a chip. The chip includes a processor and a communication interface, the communication interface is coupled to the processor, and the processor is configured to run a program or an instruction to implement each process of the foregoing text display method embodiment, and the same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A text display method, comprising:
in a case that a text edit interface is displayed, receiving a first input, wherein the first input is used to input a target character;
determining a target display parameter corresponding to the target character according to the target character; and
displaying target text content according to the target display parameter, wherein the target text content is text content input after the target character is received, or text content selected before the target character is received.

2. The method according to claim 1, wherein before the receiving a first input, the method further comprises:
receiving a second input;
displaying a first setting interface in response to the second input;
receiving a third input in the first setting interface; and
associating the target character with the target display parameter in response to the third input.

3. The method according to claim 1, wherein in a case that the target character is pre-associated with at least two candidate display parameters, the determining a target display parameter corresponding to the target character according to the target character comprises:
displaying a first window control in response to the first input, wherein the first window control comprises function options in one-to-one correspondence with the at least two candidate display parameters;
receiving a fourth input for a target function option, wherein the function options in one-to-one correspondence with the at least two candidate display parameters comprise the target function option; and
in response to the fourth input, displaying a candidate display parameter corresponding to the target function option as the target display parameter.

4. The method according to any one of claims 1 to 3, wherein before the receiving a first input, the method further comprises:
performing natural language processing on text in the text edit interface, to divide the text in the text edit interface into at least two parts of text; and
displaying character input box controls in one-to-one correspondence with the at least two parts of text, wherein
the first input is used to input the target character in a target character input box control, wherein the target text content comprises some text corresponding to the target character input box control, and the character input box controls in one-to-one correspondence with the at least two parts of text comprise the target character input box control.

5. The method according to claim 4, wherein the at least two parts of text comprise: at least two paragraphs, at least two statements, or at least two phrases.

6. The method according to claim 4, wherein the performing natural language processing on text in the text edit interface, to divide the text in the text edit interface into at least two parts of text comprises:
displaying a natural language processing mode control;
receiving a fifth input for the natural language processing mode control; and
in response to the fifth input, performing first natural language processing on the text in the text edit interface, to divide the text in the text edit interface into N paragraphs, wherein N is an integer greater than 1;
in a case that the at least two parts of text comprise at least two statements, the method further comprises:
receiving a sixth input for a target paragraph, wherein the N paragraphs comprise the target paragraph; and
in response to the sixth input, performing second natural language processing on the target paragraph, to divide the target paragraph into M statements, wherein M is an integer greater than 1; and
in a case that the at least two parts of text comprise at least two phrases, the method further comprises:
receiving a seventh input for a target statement, wherein the M statements comprise the target statement; and
in response to the seventh input, performing third natural language processing on the target statement, to divide the target statement into L phrases, wherein L is an integer greater than 1.

7. The method according to claim 5, wherein the displaying character input box controls in one-to-one correspondence with the at least two parts of text comprises:
in a case that the at least two parts of text comprise L phrases, displaying L character input box controls in L display areas corresponding to the L phrases; and
in a case that the at least two parts of text comprise X paragraphs or statements, displaying X text numbers in X display areas corresponding to the X paragraphs or statements, and displaying a second window, wherein the second window comprises X character input box controls corresponding to the X text numbers, and X is an integer greater than 1.

8. A text display apparatus, comprising:
a first input module, configured to: in a case that a text edit interface is displayed, receive a first input, wherein the first input is used to input a target character;
a first determining module, configured to determine a target display parameter corresponding to the target character according to the target character; and
a first display module, configured to display target text content according to the target display parameter, wherein the target text content is text content input after the target character is received, or text content selected before the target character is received.

9. The apparatus according to claim 8, further comprising:
a second input module, configured to receive a second input;
a second display module, configured to display a first setting interface in response to the second input;
a third input module, configured to receive a third input in the first setting interface; and
an association module, configured to associate the target character with the target display parameter in response to the third input.

10. The apparatus according to claim 8, wherein in a case that the target character is pre-associated with at least two candidate display parameters, the first determining module comprises:
a first display unit, configured to display a first window control in response to the first input, wherein the first window control comprises function options in one-to-one correspondence with the at least two candidate display parameters;
a first input unit, configured to receive a fourth input for a target function option, wherein the function options in one-to-one correspondence with the at least two candidate display parameters comprise the target function option; and
a first determining unit, configured to: in response to the fourth input, display a candidate display parameter corresponding to the target function option as the target display parameter.

11. The apparatus according to any one of claims 8 to 10, further comprising:
a first processing module, configured to perform natural language processing on text in the text edit interface, to divide the text in the text edit interface into at least two parts of text; and
a third display module, configured to display character input box controls in one-to-one correspondence with the at least two parts of text, wherein
the first input is used to input the target character in a target character input box control, wherein the target text content comprises some text corresponding to the target character input box control, and the character input box controls in one-to-one correspondence with the at least two parts of text comprise the target character input box control.

12. The apparatus according to claim 11, wherein the at least two parts of text comprise: at least two paragraphs, at least two statements, or at least two phrases.

13. The apparatus according to claim 11, wherein the first processing module comprises:
a second display unit, configured to display a natural language processing mode control;
a second input unit, configured to receive a fifth input for the natural language processing mode control; and
a first processing unit, configured to: in response to the fifth input, perform first natural language processing on the text in the text edit interface, to divide the text in the text edit interface into N paragraphs, wherein N is an integer greater than 1;
in a case that the at least two parts of text comprise at least two statements, the apparatus further comprises:
a fourth input module, configured to receive a sixth input for a target paragraph, wherein the N paragraphs comprise the target paragraph; and
a second processing module, configured to: in response to the sixth input, perform second natural language processing on the target paragraph, to divide the target paragraph into M statements, wherein M is an integer greater than 1; and
in a case that the at least two parts of text comprise at least two phrases, the apparatus further comprises:
a fifth input module, configured to receive a seventh input for a target statement, wherein the M statements comprise the target statement; and
a third processing module, configured to: in response to the seventh input, perform third natural language processing on the target statement, to divide the target statement into L phrases, wherein L is an integer greater than 1.

14. The apparatus according to claim 12, wherein the third display module is specifically configured to:
in a case that the at least two parts of text comprise L phrases, display L character input box controls in L display areas corresponding to the L phrases; and
in a case that the at least two parts of text comprise X paragraphs or statements, display X text numbers in X display areas corresponding to the X paragraphs or statements, and display a second window, wherein the second window comprises X character input box controls corresponding to the X text numbers, and X is an integer greater than 1.

15. An electronic device, comprising a processor, a memory, and a program or an instruction that is stored in the memory and that can be run on the processor, wherein when the program or the instruction is executed by the processor, the steps of the text display method according to any one of claims 1 to 7 are implemented.

16. A readable storage medium, wherein the readable storage medium stores a program or instruction, and when the program or the instruction is executed by a processor, the steps of the text display method according to any one of claims 1 to 7 are implemented.

17. A chip, comprising a processor and a communication interface, wherein the communication interface is coupled to the processor, and the processor is configured to run a program or an instruction, to implement the steps of the text display method according to any one of claims 1 to 7.

18. A computer program product, wherein the program product is stored in a non-volatile storage medium, and the program product is executed by at least one processor to implement the steps of the text display method according to any one of claims 1 to 7.

19. An electronic device, configured to implement the steps of the text display method according to any one of claims 1 to 7.
